# EUROPÄISCHE PATENTANMELDUNG

(11) **EP 2 706 549 A1**
(43) Veröffentlichungstag der Anmeldung: **12.03.2014**
(21) Anmeldenummer: 13182946.7
(22) Anmeldetag: 04.09.2013
(51) Int. Cl.: H01H 33/662

(54) **Umgossener Leistungsschalter und Verfahren zu seiner Herstellung**

(30) Priorität: 07.09.2012 AT 9832012
(71) Anmelder: Kuvag Gmbh & Co Kg, 4720 Neumarkt im Hausruckkreis (AT)
(72) Erfinder: Pferzinger, Thomas, 4441 Behamberg (AT)
(74) Vertreter: Pinter, Rudolf

(57) **Zusammenfassung**

Verfahren zur Herstellung von Leistungsschaltern, dadurch gekennzeichnet, dass die Vakuumschaltkammer (1) mit einer Schutzschicht (7) aus weichen Vergußmaterial an den Mantelflächen umhüllt ist, wobei diese Schutzschicht mit Hilfe einer verloren Form (5) hergestellt wird, sodass Vakuumschaltkammer (1), weiche Schutzschicht (7) für die Vakuumkammer und verlorene Form (5) nach der chemischen Vernetzung eine Einheit bilden, und diese Einheit mit den elektrischen Anschlußleitern (2) und mit Kontaktarmaturen in einem weiteren Herstellungsschritt mit Epoxy (4) in einer Metallform zum Leistungsschalter vergossen werden.

## Beschreibung

Die Anmeldung beschreibt ein vorteilhaftes Verfahren zur Herstellung von ölfreien Leistungsschaltern oder Phasenschaltern sowie derartige Schalter selbst. Diese werden beispielsweise in Schaltanlagen von Mittelspannungs-Energieübertragungsnetzen eingesetzt.

Leistungsschalter werden zunehmend in Trockenbauweise hergestellt. Der Schalter besteht aus einer Vakuumschaltkammer, welche die Schaltkontakte beinhaltet und aus daran angeschlossenen metallischen Leitern für die Zu- und Ableitung zu den Anschlusskontakten. Die Betätigung der Schaltkontakte in der Vakuumkammer erfolgt über eine isolierende Schaltstange. Die gesamte Anordnung wird zur Isolation mit Gießharz, zum Beispiel mit Epoxyharz, umgossen, sodass eine kompakte Schalteinheit geschaffen wird.

Bei der Herstellung des Schalters treten insbesondere beim Umguß der Vakuumschaltkammer mehrere Probleme auf, die Einfluss auf die Produktionsausschussrate aber auch auf seine Betriebssicherheit haben:
- Die keramische Schaltkammer muss einerseits vor mechanischen Spannungen geschützt werden, dass sie bei der Herstellung und im Betrieb nicht brechen oder reißen kann.
- Beim Umguß der Vakuumkammer tritt infolge der exothermen Härtung des Epoxyharzes ein Reaktionsschwund auf, der zusätzliche mechanische Spannungen erzeugt, welche auf die Vakuumschaltkammer wirken.
- Dieses Problem wird durch die unterschiedlichen thermischen Ausdehnungskoeffizienten des Keramikmaterial der Vakuumschaltkammer einerseits und durch jenen des umhüllenden Epoxymaterials andererseits, vergrößert. Im Betriebsfall wirken daher laufend mechanische Spannungen an den Grenzflächen von Vakuumschaltkammer und Vergußmaterial. Diese sind speziell bei Temperaturwechseln, denen der Leistungschalter in seiner gesamten Betriebszeit laufend ausgesetzt ist, potentielle Ursachen für Fehler.
- Durch teileweise oder vollständige Ablösung des Vergußmaterials von der Schaltkammer entstehen Hohlräume, welche elektrische Teilentladung hervorrufen können.
- Erfahrungsgemäß treten die Fehlstellen vorwiegend auf der zylindrischen Mantelfläche und nicht an den Kreisflächen auf.
- Die genannten Fehler sind nicht reparabel und führen zu hohen Ausschusszahlen.

Die beschriebenen Probleme sind bekannt und werden durch eine Umhüllung der Vakuumkammer mit einem weichen, elastischen Silikon vor dem eigentlichen Epoxyumguß behoben. Die Umhüllung der Vakuumschaltkammer mit Silikon wird in einer separaten Form durch Verguß in einem vorgelagerten Prozeßhergestellt. Für diese Lösung benötigt man allerdings Primer bzw. Haftvermittler zwischen Vakuumkammer und Silikon (vor dem Silikon-Verguß der Schaltkammer) - aber auch nach dem Silikonverguß der Schaltkammer, insbesondere zwischen Silikon- und dem entgültigen Epoxyumguß zur Herstellung des Leistungsschalters. Die Haftung von Epoxy, Polyurthan oder Silikon auf bereits ausgehärteten Silikonoberflächen ist extrem schlecht, sodass Haftvermittler unbedingt erforderlich sind. Außerdem entfalten die zur Haftungsverbesserung auf die ausgehärtete Silikonschicht aufgetragenen Primer die besten Hafteigenschaften nämlich nur in einem schmalen Zeitfenster nach ihrem Auftrag und vor dem Letztumguß mit Epoxy.

Allenfalls nötige Wärmebehandlung zur Trocknung des auf der Silikonschicht aufgetragenen Primers mit erforderlicher exakter Einhaltung der Temperaturführung während definierter Zeit und Luftfeuchtigkeitsschwankungen reduzieren das Prozessfenster weiterhin. Denn die solcherart vorbehandelten Teile müssen rechtzeitig - also nicht zu früh und nicht zu spät - zum finalen Umguß bereitgestellt sein.

Die Manipulation einer solcherart vorbereiteten Schaltkammer ist schwierig, da die Oberflächen klebrig und nicht berührt werden sollen. Verschmutzungen und Handschweiß0 durch die Manipulation können die Qualität der Haftschicht auf der Silikonumhüllung erheblich beeinträchtigen.

Somit ist es sehr schwierig, fehlerfreie Hafteigenschaften der weichen, elastischen Silikonschicht an das umhüllende Epoxy im realen Produktionsprozesses zu garantieren. Aus der DE10 2004 047 276 B4 und EP 2 407 989 A1 sind umgossene Leistungsschalter bzw. deren Herstellung bekannt.

Gemäß der EP 2 407 989 A1 wird zuerst die äußere Epoxidharzschicht als Hohlkörper gefertigt (Isolierstoffgehäuse) und dann die Bauteile komplett assembliert in den Hohlkörper eingesetzt und dann die Zwischenräume mit Silikon ausgegossen. Gemäß DE10 2004 047 276 B4 wird ebenfalls zuerst die Epoxidharzschicht gefertigt, dann die Bauteile eingesetzt und mit einer elastischen Polsterung gefüllt.

### Ziel der Erfindung ist es daher,

- die Vakuumkammer mit einer elastischen, weichen und schützenden Schicht zu umhüllen und
- gleichzeitig eine sichere Haftung des formgebenden , äußeren Epoxy-Umgusses an die geschützte Schaltkammer in einem breiten Prozessfenster zu ermöglichen und
- eine praktikable Manipulation der mit Primer behandelten, geschützten Vakuumkammer zu ermöglichen, wobei die Oberfläche idealerweise vor Berührung geschützt ist.

Dieses Ziel wird gemäß der Erfindung durch die in Anspruch 1 stehenden Merkmale erreicht. Die Neuentwicklung ermöglicht es die Vakuumschaltröhre mit Hilfe der verlorenen Form und allen anderen Bauteilen assembliert als Ganzes in eine APG Form einzubauen und danach erst mit einer Epoxidharzschicht zu umgießen (Isolierstoffgehäuse). Dies ermöglicht es, Fehlstellen bei der Verbindung des Vakuumschalters und der Polsterung vor dem Verguss zu erkennen und zu korrigieren. Die Verlorene Form ermöglicht den direkt Umguss mit Epoxidharz in der Metallform ohne aufwendige Vorbehandlung oder Verwendung von Primer. Somit kann Ausschuss zur Gänze eliminiert werden, der komplette Prozess verkürzt und eine schnellere Durchlaufzeit erzielt werden, was wiederum Kosten beträchtlich senkt

Weitere vorteilhafte Merkmale und Ausgestaltungen der Erfindung sind den Unteransprüchen und der folgenden Beschreibung der Zeichnung zu entnehmen.
Figur 1 zeigt dabei den prinzipiellen Aufbau eines Leistungschalters. Anhand von Fig.2 wird der erfindungsgemäße Vorschlag zur Herstellung des Leistungschalters erläutert.
Fig. 3 zeigt einen Schnitt des Leistungschalters in Bereich der Vakuumklammer und Fig. 4 zeigt eine besonders vorteilhafte Einheit der Vakuumkammer.

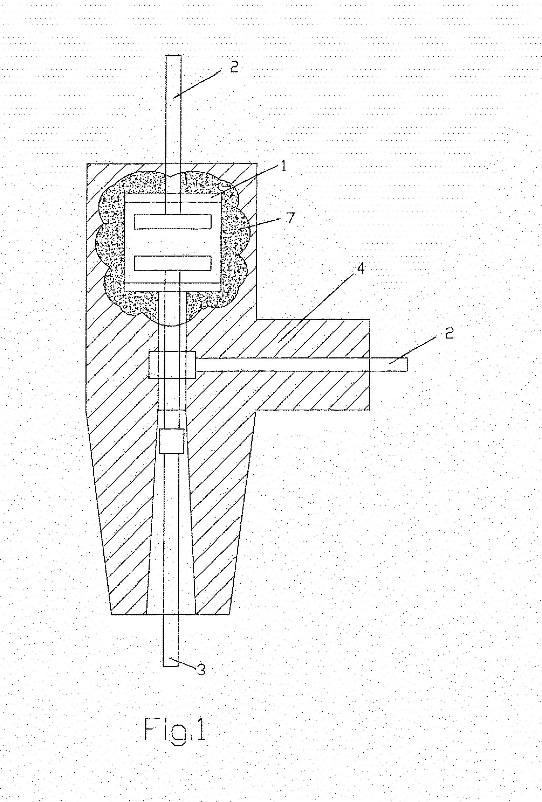

Zur besseren Anschlaulichkeit zeigt Fig. 1 den prinzipiellen Aufbau eines Leistungschalters, der mit einer umgossenen Vakuumschaltkammer hergestellt wird:

Die vorbehandelte, meist keramische, Vakuumschaltkammer (1), welche die Schaltkontakte enthält, ist mit den metallischen Zu- und Ableitungen (2) verbunden bzw. kontaktiert. (Die Vakuumschaltkammer, wurde, wie zuvor beschrieben, mit einer weichen, elastischen Schicht (7) in einem separaten vorgelagerten Herstellungsprozeß umhüllt und vor mechanischen Spannungen geschützt. Die bevorzugte Härte eines solchen Materials weist eine Shorehärte zwischen A 15 und D90 auf).Die Betätigung der meist federbelasteten Schaltkontakte in der Vakuumkammer erfolgt durch eine isolierte Schaltstange (3). Das umhüllende Epoxy-Material (4) erlaubt die Fixierung der Komponenten zueinander und bestimmt die äußere Form des Schalters.

Der formgebende, zweite Umguß erfolgt in metallischen Formen, wobei die Leiter, die Vakuumschaltkammer und die Anschlußelektrodenmittels entsprechender Vorrichtungen in der Gießform fixiert sind. Hohlräume werden mittels Gußkernengeschaffen. Der Umguß erfolgt meist im automatischen Druckgelierverfahren oder im Vakuumgußverfahren bei Temperaturen zwischen 80° und 150°C. Die Form wird mit Vergußmaterial gefüllt, bis dieses in der Form geliert. Der Schalter wird danach aus der Form entnommen und meist in einem separaten Ofen nachgehärtet.

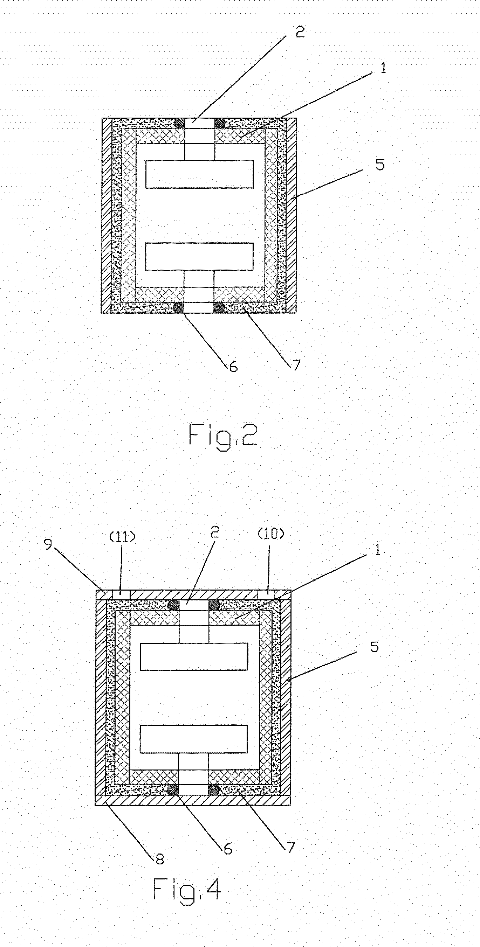

Anhand von Figur 2soll der erfindungsgemäße Vorschlag zur Herstellung des Leistungsschalters erläutert werden.

Nach Figur 2 wird die Vakuumschaltkammer (1) in einer verlorenen Form (5) mit weichem Vergußmaterial (7) umgossen. Die verlorene Form (5) ist ein zylindrisches Rohr thermoplastischen Kunststoff, wie z.um Beispiel Polyamid oder PBT. Auch kann das Rohr aus Epoxy oder Polyurethan gegossen sein. Die Abdichtung der Form nach unten erfolgt durch eine Silikonplatte, gegebenenfalls mit entsprechenden Abdichtungen zum Zylinder (5). Das zylindrische Rohr (5) wird mit der Bodenplatte und der Vakuumschaltkammer (1) versehen, dann wird die Form (5) mit weichem Polyurethan oder Silikon bis zur Oberkante gefüllt. Die bevorzugte Härte eines solchen Materials weist eine Shorehärte zwischen A 15 und D90 auf. Für einen kostengünstigen Prozeß werden kalthärtende Mehrkomponenten-Vergußsysteme aus Silikon oder Polyurethan bevorzugt.

Das umhüllende, gestaltgebende Epoxy-Material (4) mit hoher Festigkeit erlaubt die Fixierung der Komponenten zueinander und bestimmt die äußere Form des Schalters. Das gegossene Epoxymaterial (4) kann aliphatisch, cycloaliphatsich UV-beständig , hydrophob, zähmodifiziert und flammgehemmt sein, für Sonderfälle kann auch heißhärtenden Polyurethan mit ähnlichen Eigenschaften eingesetzt werden.

Der Verguß erfolgt vorzugsweise unter Vakuum, kann bei vorevakuiertem Vergußmaterial aber auch atmosphärisch und besonders vorteilhaft, mit kalthärtenden Vergußmassen durchgeführt werden. Die Abdichtung zu den Kontaktstellen der Vakuumschaltkammer erfolgt durch die Dichtungselemente (6).Ebenfalls kann ein Deckelelement die Dichtelemente (7) an der Oberseite positionieren. Diese verhindern, dass das weiche Vergußmaterial in die Schaltkammer eindringen kann bzw. die elektrischen Kontakte beim Verguß verschmutzt werden. Nach Aushärten der Vergußmasse entsteht eine kompakte handliche Einheit. Die Außenfläche des Zylindrischen Rohrers (5) kann für den entgültigen, äußeren Epoxy-Verguß einfach gereinigt und/ oder sandgestrahlt werden. Eine Haftungsbeeinträchtigung durch Handschweiß - wie bei Haftvermittlern für Silikonekann ausgeschlossen werden.

Die verlorene Form (5) ist an den Enden vorzugsweise gerundet ausgeführt, um mechanische Spannungen beim nachfolgenden Epoxyumguß zu vermeiden.

Figur 4 zeigt eine besonders vorteilhafte Einheit einer geschützten Vakuumkammer. Die Boden- und Deckelelemente (8) und (9) ermöglichen einen sicheren, berührgeschützten Abschluss der Umhüllung(7) gegenüber der Umgebung. Das Deckelelement (9) verfügt über Bohrungen (10) zum Einbringen der Schutzschicht (7) und ist mit Entlüftungsbohrungen (11) für den blasenfreien Verguß ausgestattet. Die Elemente (89 und (9) sind an den Übergangsstellen zum Zylinder (5) der verlorenen Form vorteilhafterweise gerundet.

Vor dem Verguß kann die Vakuumkammer und die Innenseite der verlorenen Form (5) mit Haftvermittler behandelt werden. In der Praxis hat sich allerdings gezeigt, dass lediglich mit Entfetten der Oberflächen und ohne Haftvermittler an den Zylindermantelflächen völlig fehlerfreie Teile hergestellt werden konnten, die auch nach Temperaturwechseltests bei einer Prüfspannung von 70kV keine nennenswerte Teilentladung zeigten.

Somit kann mit dem erfindungsgemäßen Vorschlag auch die Vorbehandlung der verlorenen Form (5), und der Vakuumkammer (1) deutlich reduziert und der heikle, zeitintensive Haftvermittlerauftrag eingespart werden.

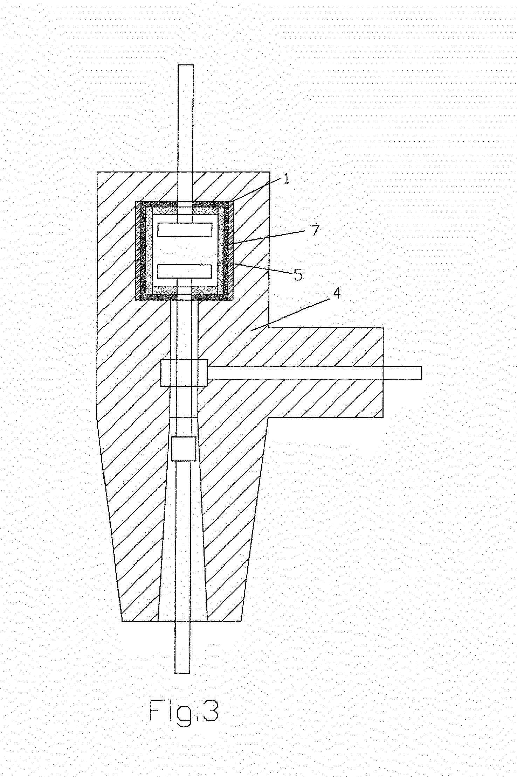

Figur 3 zeigt schließlich einen Schnitt des Leistungsschalters im Bereich der Vakuumkammer:

Die verlorene Form (5) in Gestalt des zylindrischen Rohres nimmt die Schaltkammer (1)auf. Die Schaltkammer ist mit weichem Isoliermaterial (7), wie Silikon oder Polyurethan umhüllt und von Schwundspannungen des Epoxymaterials (4) vom äußeren, finalen Umguss abgeschirmt.

Der erfindungsgemäße Vorschlag lautet somit:

Verfahren zur Herstellung von Leistungsschaltern, **dadurch gekennzeichnet, dass** die Vakuumschaltkammer (1) mit einer Schutzschicht (7) aus weichen Vergußmaterial an den Mantelflächen umhüllt ist, wobei diese Schutzschicht mit Hilfe einer verloren Form (5) hergestellt wird, sodass Vakuumschaltkammer (1), weiche Schutzschicht (7) für die Vakuumkammer und verlorene Form (5) nach der chemischen Vernetzung eine Einheit bilden, und diese Einheit mit den elektrischen Anschlußleitern (2) und mit Kontaktarmaturen in einem weiteren Herstellungsschritt mit Epoxy (4) in einer Metallform zum Leistungsschalter vergossen werden.

Das Verfahren beschränkt sich nicht nur auf die Umhüllung von Schaltkammern, sondern kann für alle druckempfindlichen Bauteile, welche besonders guten Hafteigenschaften für eine weitere Umhüllung erfordern, verwendet werden.

## Patentansprüche

1. Verfahren zur Herstellung von Leistungsschaltern, **dadurch gekennzeichnet, dass** die Vakuumschaltkammer (1) mit einer Schutzschicht (7) aus weichen Vergußmaterial an den Mantelflächen umhüllt ist, wobei diese Schutzschicht mit Hilfe einer verloren Form (5) hergestellt wird, sodass Vakuumschaltkammer (1), weiche Schutzschicht (7) für die Vakuumkammer und verlorene Form (5) nach der chemischen Vernetzung eine Einheit bilden, und diese Einheit mit den elektrischen Anschlussleitern (2) und mit Kontaktarmaturen in einem weiteren Herstellungsschritt mit Epoxyharz (4) in einer Metallform zum Leistungsschalter vergossen werden.

2. Verfahren zur Herstellung von Leistungsschaltern nach Anspruch 1, **dadurch gekennzeichnet, dass** die Schutzschicht (7) aus weichem Polyurethan oder weichem Silikon hergestellt wird.

3. Verfahren zur Herstellung von Leistungsschaltern nach Anspruch 2, **dadurch gekennzeichnet, dass** die Schutzschicht (7) Shorehärten zwischen A15 und D90 aufweisen.

4. Verfahren zur Herstellung von Leistungsschaltern nach den Ansprüchen 1 bis 3, **dadurch gekennzeichnet, dass** die verlorene Form (5) aus Polyamid oder Polybutylentherephtalat hergestellt wird.

5. Verfahren zur Herstellung von Leistungsschaltern nach den Ansprüchen 1 bis 4, **dadurch gekennzeichnet, dass** die weiche Schutzschicht (7) (mit Ausnahme der Kontaktstellen) auch Boden und/ oder Deckel der Vakuumschaltkammer umhüllen und die kreisförmigen Boden- und Deckelflächen der weichen Schutzschicht direkt von Epoxy(4) umhüllt werden.

6. Verfahren zur Herstellung von Leistungsschaltern nach den Ansprüchen 1 bis 4, **dadurch gekennzeichnet, dass** die verlorene Form aus Zylinder (5), Boden (8) und Deckel (9) besteht, wobei die Kontakte der Vakuumschaltkammer mit Abdichtelementen (6) geschützt sind und dass Boden (8), Deckel (9) und Zylinder (5) der verlorenen Form mit der eingebrachten, weichen, vergossenen Schutzschicht (7) und der Schaltkammer (1) eine Einheit bilden, die in einem weiteren Herstellungsschritt mit den elektrischen Anschlussleitern (2) und Anschlussarmaturen versehen in einer Metallform mit Epoxyharz (4) zum Leistungsschalter vergossen wird.

7. Verfahren zur Herstellung von Leistungsschaltern nach den Ansprüchen 1 bis 5, **dadurch gekennzeichnet, dass** der Übergang der verlorenen Form (5) zu den Stirnseiten gerundet ausgeführt ist.

8. Verfahren zur Herstellung von Leistungsschaltern nach den Anspruch 6, **dadurch gekennzeichnet, dass** der Übergang der Boden (8) -und Deckelelemente (9) zu den Stirnseiten gerundet ausgeführt ist.

9. Leistungsschalter hergestellt nach den Verfahren wie beschrieben in den Ansprüchen 1 bis 8, **dadurch gekennzeichnet, dass** das Vergußmaterial (7) zum Umguß der Schaltkammer aus kalthärtendem Polyurethan oder Silikon besteht und daß der äußere, formgebende Umguß aus cycloalipahtischen, allenfalls hydrophoben, zähmodifizierten oder flammgehemmten Epoxy besteht.
